(19) Europäisches Patentamt
European Patent Office
Office européen des brevets

(11) **EP 2 213 239 B1**

(12) **EUROPEAN PATENT SPECIFICATION**

(45) Date of publication and mention
of the grant of the patent:
**07.11.2018 Bulletin 2018/45**

(51) Int Cl.:
**B06B 1/02** *(2006.01)*          **G01S 7/52** *(2006.01)*
**G01S 15/89** *(2006.01)*

(21) Application number: **08849684.9**

(86) International application number:
**PCT/JP2008/070738**

(22) Date of filing: **14.11.2008**

(87) International publication number:
**WO 2009/063964 (22.05.2009 Gazette 2009/21)**

(54) **ULTRASONIC IMAGING DEVICE**

ULTRASCHALLBILDGEBUNGSVORRICHTUNG

DISPOSITIF D'IMAGERIE À ULTRASONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.11.2007   JP 2007297425**

(43) Date of publication of application:
**04.08.2010   Bulletin 2010/31**

(73) Proprietor: **Hitachi, Ltd.**
**Chiyoda-ku**
**Tokyo 100-8280 (JP)**

(72) Inventor: **TANAKA, Hiroki**
**Chiyoda-ku,**
**Tokyo 100-8220 (JP)**

(74) Representative: **Strehl Schübel-Hopf & Partner**
**Maximilianstrasse 54**
**80538 München (DE)**

(56) References cited:
**JP-A- 2006 122 344      JP-T- 2004 503 313**
**JP-T- 2007 527 285      US-A- 5 619 476**
**US-A1- 2005 200 241      US-A1- 2007 010 744**

**Description**

Technical Field

The present invention relates to a capacitive micro-machined ultrasonic transducer and an ultrasonic imaging device, and in particular, to a method for driving an ultrasonic probe using a capacitive micro-machined ultrasonic transducer.

Background Art

Many ultrasonic transducers currently used in ultrasonic probes utilize the piezoelectric effect and inverse piezoelectric effect of piezoelectric ceramics, for example, PZT (lead zirconate titanate), for ultrasonic transmission and reception. To implement a more efficient transducer array with a wider frequency band which replaces these piezoelectric transducers, capacitive micro-machined ultrasonic transducers (cMUTs; hereinafter simply referred to as cMUTs) have been developed; the capacitive micro-machined ultrasonic transducers are manufactured using a microfabrication technology intended for silicon surfaces and bulks and based on a standard silicon processing technology.

In the cMUT, a diaphragm peripherally fixed by a supporting post in a very small area that is normally of the order of microns is produced using a material containing, for example, silicon and used for semiconductor processes. Electrodes are provided on the diaphragm and inside a substrate or on the surface of the substrate. Appropriate voltages are applied to both electrodes. Then, the cMUT operates as an electroacoustic transducer.

Patent Document 1: WO 01/097562A cMUT is also disclosed in US 2005/0200241 A1. US 2007/0010744 A1 discloses driving an ultrasonic transducer by superposition of a fundamental wave and a modulating wave.

Disclosure of the Invention

Problems to be Solved by the Invention

The cMUT in principle exhibits a nonlinear response to a driving voltage. Thus, controlling the waveform of the driving voltage so as to obtain the desired response is more difficult for the cMUT than for conventional probes.

The sensitivity of the transducer is determined by multiplying transmission sensitivity by reception sensitivity. Thus, it is ideal to obtain higher transmission power and a high reception sensitivity at which lower sound pressure can be transduced into electricity. In the cMUT, a cavity is formed between the upper and lower electrodes so that the diaphragm can be vibrated in the cavity. Thus, to obtain higher transmission power through transduction, a larger cavity may be formed such that the diaphragm can be vibrated at a larger amplitude. However, the larger cavity results in a tradeoff relationship, that is, this configuration correspondingly increases the required voltage, while reducing the reception sensitivity. Thus, to improve sensitivity, it is important to more effectively vibrate the diaphragm in a limited cavity.

To be most strongly vibrated in a limited cavity, the diaphragm may be moved between the opposite ends of the cavity (between a lower surface and the position of the diaphragm maintained while no voltage is applied). However, the cMUT responds nonlinearly because of its operating principle, preventing the input driving voltage waveform from being directly reflected in the response from the diaphragm. Hence, the driving voltage needs to be controlled with the nonlinearity of the cMUT taken into account.

A method for controlling the nonlinear response from the cMUT is to pre-distort an input waveform (see, for example, Patent Document 1). However, a challenge is what input is to be provided in order to improve the transmission power or how to efficiently vibrate the cavity while realizing the desired waveform if the amplitude of the waveform varies temporally, for example, if a wave number increases. Thus, an object of the present invention is to provide a method of efficiently vibrating the diaphragm in a limited cavity by controlling an applied voltage waveform used to drive the cMUT, to accomplish both adjustment of the waveform and improvement of the transmission power.

Means for Solving the Problems

The invention is defined in the appended claims.

In the amplitude of the applied voltage waveform used to drive the cMUT, the ratio of amplitude of positive and negative is varied according to voltage or time.

When a voltage applied to between the electrodes is defined as $V(t) = V_{dc} + V_{ac}(t)$ ($V_{dc}$: bias direct voltage, $V_{ac}(t)$: alternating voltage, t: time) and the cavity between the electrodes is defined as $d(t)$, an electro static force applied to the diaphragm in the capacitive transducer is proportional to $(V(t)/d(t))^2$. In this case, if $V_{dc}$ is fixed, since $(V(t)/d(t))^2 = (V_{dc}^2 + 2V_{dc}V_{ac}(t) + V_{ac}(t)^2)/d(t)^2$, a force relating to a temporal variation corresponds to the second and subsequent terms, that is, $(2V_{dc}V_{ac}(t) + V_{ac}(t)^2)/d(t)^2$. When $V_{ac}(t)$ is lower than $V_{dc}$ to some degree, the force is proportional to $V_{ac}(t)$

and is inversely proportional to $d(t)^2$. Thus, an increase in $V_{ac}(t)$ and thus in $V(t)$ causes the diaphragm to be moved to reduce the inter-electrode distance $d(t)$. Hence, the electro static force applied to between the electrodes is not simply proportional to $V_{ac}(t)$ but increases in inverse proportion to $d(t)^2$. On the other hand, a decrease in $V_{ac}(t)$ and thus in $V(t)$ reduces the amount by which the electro static force increases in proportion to $V_{ac}(t)$. Thus, input of a symmetrical positive and negative waveform varies the force applied to the diaphragm between a direction in which the inter-electrode distance decreases and a direction in which the inter-electrode distance increases. Even if a voltage can be applied which is sufficient to displace the diaphragm to the vicinity of the lower electrode surface, the diaphragm cannot be sufficiently moved if the diaphragm vibrates in the opposite direction. In this case, a cavity in which the diaphragm can be vibrated may remain unused.

Thus, according to the present invention, the alternating voltage applied to between the electrodes is asymmetric in the direction in which the diaphragm vibrates. Furthermore, the asymmetry is temporally varied according to the voltage. The present invention thus improves the transmission power while obtaining the desired waveform.

By way of example, the present invention provides an ultrasonic imaging device according to claim 1.

Advantages of the Invention

The present invention allows the transmitted sound pressure to be efficiently radiated while enabling the waveform to be adjusted, thus improving the transmission power of the capacitive ultrasonic transducer and the sensitivity of the probe.

Brief Description of the Drawings

Figure 1 is a vertical section view showing an ultrasonic transducer.
Figure 2 is an oblique perspective view of an ultrasonic transducer array and a diagram showing a probe.
Figure 3 is a diagram showing an example of the system configuration of an ultrasonic imaging device.
Figure 4 is a diagram showing a response from a cMUT obtained using a driving waveform (wave number: 1).
Figure 5 is a diagram showing a response from the cMUT obtained using a multiwave driving waveform with a temporally varying amplitude.
Figure 6 is a diagram showing a transmission sensitivity band.
Figure 7 is a diagram showing an input voltage with a symmetrical positive and negative waveform, displacement of a diaphragm, and a transmitted sound pressure waveform.
Figure 8 is a diagram showing an input voltage with an asymmetrical positive and negative waveform (ratio of amplitude of positive and negative b/a = 2, 3; variable), displacement of the diaphragm, and the transmitted sound pressure waveform.
Figure 9 is a diagram showing the frequency spectra of transmitted sound pressures resulting from a symmetric waveform input and an input with a variable ratio of amplitude of positive and negative.
Figure 10 is a diagram showing transmission power with respect to a driving voltage.
Figure 11 is a diagram showing a waveform with a Gaussian envelope superimposed thereon.
Figure 12 is a power spectrum of the waveform with the Gaussian envelope superimposed thereon.

Description of Symbols

1 Substrate
2 Fixed electrode
3 Movable electrode
4 Insulating film
5 Insulating film
6 Diaphragm layer
7 Cavity
8 Supporting wall
13 Wire
20 Direct voltage power supply
21 Digital-to-analog converter (D/A converter)
22 Analog-to-digital converter (A/D converter)

23 Voltage limiter
31 Transmission-reception switch
32 Power supply
33 Transmission amplifier
34 Reception amplifier
35 Transmission beam former
36 Reception beam former
37 Controller unit
38 Signal processor
39 Scan converter
41 Symmetrical positive and negative input waveform
42 Transmission waveform resulting from symmetrical positive and negative waveform input
43 Asymmetrical positive and negative input waveform
44 Transmission waveform resulting from asymmetrical positive and negative input
50 Positive envelope waveform
51 Negative envelope waveform
52 Carrier waveform
53 Positive envelope waveform
54 Negative envelope waveform
55 Carrier waveform
60 Display
61 Transmission gain
70 Symmetrical positive and negative waveform, driving voltage
71 Diaphragm displacement resulting from input of symmetrical positive and negative waveform
72 Transmission waveform resulting from input of symmetrical positive and negative waveform
80 Asymmetrical positive and negative waveform, driving voltage, ratio of amplitude of positive and negative fixed to 2
81 Asymmetrical positive and negative waveform, driving voltage, ratio of amplitude of positive and negative fixed to 3
82 Diaphragm displacement resulting from input of asymmetrical positive and negative waveform, ratio of amplitude of positive and negative fixed to 2
83 Diaphragm displacement resulting from input of asymmetrical positive and negative waveform, ratio of amplitude of positive and negative fixed to 3
84 Transmission waveform resulting from input of asymmetrical positive and negative waveform, ratio of amplitude of positive and negative fixed to 2
85 Transmission waveform resulting from input of asymmetrical positive and negative waveform, ratio of amplitude of positive and negative fixed to 3
90 Asymmetrical positive and negative waveform, driving voltage, variable ratio of amplitude of positive and negative (maximum amplitude ratio: 2)
91 Asymmetrical positive and negative waveform, driving voltage, variable ratio of amplitude of positive and negative (maximum amplitude ratio: 3)
92 Diaphragm displacement resulting from input of asymmetrical positive and negative waveform, variable ratio of amplitude of positive and negative (maximum amplitude ratio: 2)
93 Diaphragm displacement resulting from input of asymmetrical positive and negative waveform, variable ratio of amplitude of positive and negative (maximum amplitude ratio: 3)
94 Transmission waveform resulting from input of asymmetrical positive and negative waveform, variable ratio of amplitude of positive and negative (maximum amplitude ratio: 2)
95 Transmission waveform resulting from input of asymmetrical positive and negative waveform, variable ratio of amplitude of positive and negative (maximum amplitude ratio: 3)
100 Ultrasonic transducer
110 Carrier waveform
111 Gaussian envelope
210 Acoustic lens
220 Matching layer
230 Backing material
240 Conductive membrane
1000 Ultrasonic transducer array
2000 Ultrasonic probe

Best Mode for Carrying Out the Invention

An embodiment of the present invention will be described below with reference to the drawings.

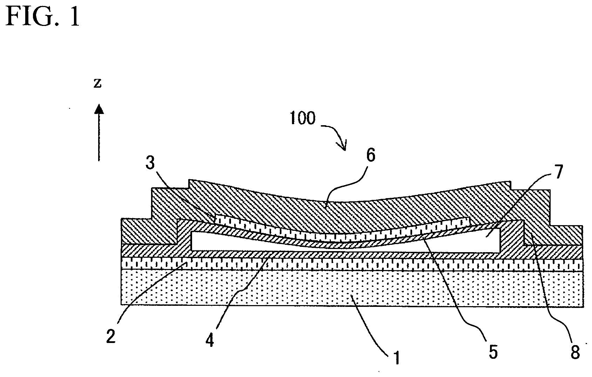

A transducer, a device configuration, and the like according to the embodiment of the present invention will be described. Figure 1 is a vertical section view showing one element in a cMUT that is a capacitive ultrasonic transducer. The ultrasonic transducer (cMUT) cell 100 includes a flat plate-like substrate 1 composed of an insulator such as silicon single crystal or a semiconductor, a thin film-like fixed electrode 2 formed on the substrate 1 and composed of a conductor such as aluminum, tungsten, or titanium, and a diaphragm 6 formed on the fixed electrode 2. The diaphragm 6 is fixed to the substrate by a supporting wall 8 with its periphery extending upward from the substrate. A cavity 7 peripherally closed by the supporting wall 8 is formed between the diaphragm 6 and the substrate 1. A movable electrode 3 coated with an insulating film 5 is located in the cavity 7 and is present inside the diaphragm 6. When a voltage is applied between the fixed electrode 2 and the movable electrode 3, the movable electrode 3 is displaced toward the substrate by an electro static force. To prevent an electrical conduction of the fixed electrode 2 and the movable electrode 3 caused by contact between the two electrodes induced by an excessive displacement of the movable electrode 3, it is preferable that an insulating film 4 provided on the fixed electrode 2 or that the movable electrode 3 be coated with the insulating film 5. Owing to specification requirements, the cell shape varies depending on design; the movable electrode 3 may stick out from the diaphragm 6 or reach the supporting wall 8 or the thickness of the diaphragm 6 is not uniform.

The diaphragm 6, the supporting wall 8, and the movable electrode 3 coated with the insulating film 5 are made of a material that can be processed by the semiconductor process technology. For example, the materials described in U.S. Patent No. 6,359,367 can be used. Examples of such materials include silicon, sapphire, any forms of glass, polymer (polyimide and the like), polycrystalline silicon, silicon nitride, silicon oxynitride, a thin metal film (aluminum alloy, copper alloy, or tungsten), spin-on-glass (SOG), an implantable dope material or a diffusion dope material, and a growth film composed of silicon oxide or silicon nitride. The cavity 7 may be vacuum inside or may be filled with air or any gas. In a steady state (non-operating state), the distance ((z) direction) between the movable electrode 3 and the substrate 1 is mainly maintained by the rigidity of the diaphragm 6, the supporting wall 8, and the movable electrode 3.

The ultrasonic transducer 100 operates as a variable capacitor in which the fixed electrode 2 and the movable electrode 3 are arranged so as to sandwich the cavity 7 and the insulating film 4 between fixed electrode 2 and the movable electrode 3. When a force is applied to the movable electrode 3, which is then displaced in a (z) direction, the distance ((z) direction) between the fixed electrode 2 and the movable electrode 3 changes to change the capacitance of the capacitor. The movable electrode 3 is coupled to the diaphragm 6. Thus, the movable electrode 3 is displaced even when a force is applied to the diaphragm 6. At this time, if charges are accumulated in the fixed electrode 2 and the movable electrode 3, not only the distance ((z) direction) between the fixed electrode 2 and the movable electrode 3 changes to change the capacitance of the capacitor, but also a voltage is generated between the electrodes. When the force of ultrasonic waves or the like which causes a certain dynamic displacement propagates to the diaphragm 6 as described above, the displacement is transduced into an electric signal. Furthermore, when an electrical potential difference is applied to between the fixed electrode 2 and the movable electrode 3, charges of different signs are accumulated in each electode. The resulting electro static force causes the movable electrode 3 to move in the (z) direction. At this time, the diaphragm 6 is simultaneously displaced because the movable electrode 3 and the diaphragm 6 are coupled together. Thus, if an acoustic propagation medium such as air, water, plastic, rubber, or a living body is present above the diaphragm 6 ((z) direction), sound is radiated. That is, the ultrasonic transducer 100 is an electroacoustic transduction element with a function to transduce an input electric signal into an ultrasonic signal to radiate the ultrasonic signal to the medium located adjacent to the diaphragm 6 and to transduce the ultrasonic signal received from the medium into an electric signal to output the electric signal.

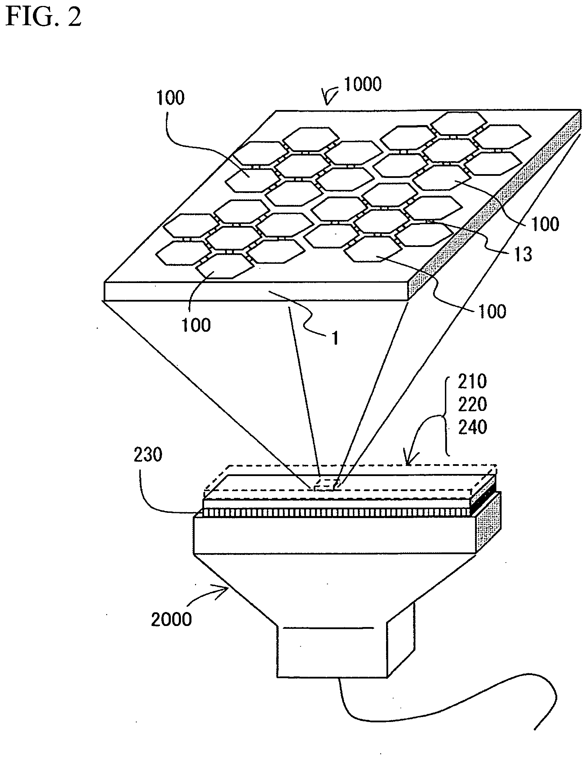

Figure 2 is an oblique perspective view showing an ultrasonic transducer array 1000. The ultrasonic transducer array 1000 forms a transmission and reception surface for an ultrasonic probe 2000. The ultrasonic transducer array 1000 includes a substrate 1 on which a large number of cells are formed; each of the cells corresponds to the above-described fine (for example, a horizontal width: 50 $\mu$m) ultrasonic transducer 100, and a predetermined number of ultrasonic transducers 100 are electrically connected together by wires 13. The illustrated cells are hexagonal. However, the shape of the cell may be appropriately varied depending on applications. Furthermore, the number of ultrasonic transducers 100 is not limited to that shown in the figure. More cells of ultrasonic transducers 100 shown in Figure 2 may be integrated on a larger substrate by an appropriate semiconductor fabrication technology. The arrangement of the ultrasonic transducers 100 is only illustrative. Instead of the honeycomb form, any other arrangement form such as a grid type may be used. Furthermore, the arrangement surface may be either planar or curved, and the surface shape may be, for example, circular or polygonal. Alternatively, the ultrasonic transducers 100 may be arranged in a linear or curved form.

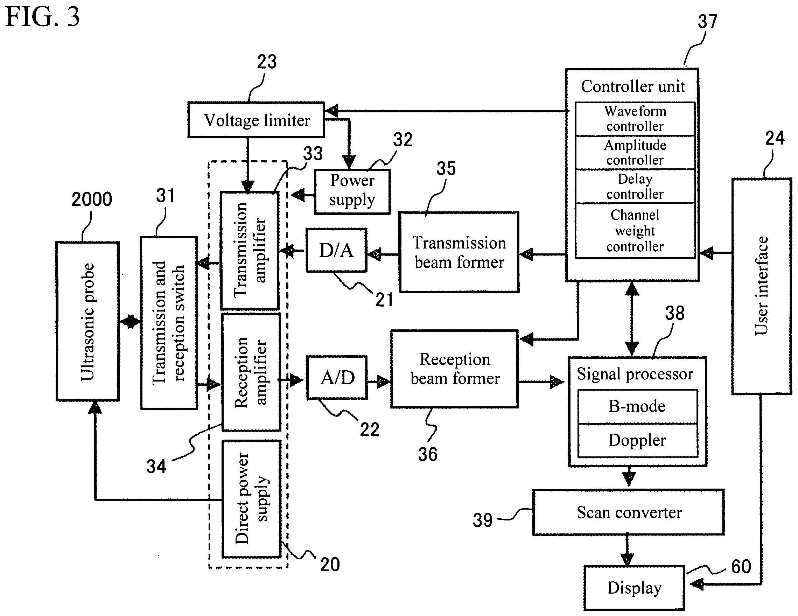

As shown in Figure 3, each individual cell or a group of a predetermined number of cells is connected via a transmission and reception switch 31 to a transmission beam former 35 and a reception beam former 36 in an ultrasonic imaging device including the ultrasonic probe 2000. The ultrasonic probe 2000 operates as an array configured to form an ultrasonic beam using a DC power supply 20, a transmission amplifier 33, and a reception amplifier 34, all of which are driven by a power supply 32. The ultrasonic probe 2000 is utilized to transmit and receive ultrasonic waves. Transmission and reception signals are controlled by a controller unit 37 in accordance with the purpose. For a transmission signal, the waveform of the signal is controlled by the controller unit, and a voltage is applied to an electrode on each individual cell or a channel corresponding to a group of cells; any waveform and amplitude and any delay time are set for the cell or channel via the transmission beam former 35, the D/A converter 21, and the transmission amplifier 33. Furthermore, the ultrasonic imaging device includes a voltage limiter 23 so as to avoid applying an excessive voltage to the probe or control the transmission waveform. A reception signal is processed by the reception amplifier 34, the A/D converter 22, and the reception beam former 36 and then converted into a video signal through B-mode tomographic image processing or Doppler processing performed by the signal processor 38. The video signal is then displayed on a display 60 via a scan converter 39. Furthermore, some of the components shown in Figure 3 may be provided inside the probe 2000. The flows of transmission and reception of ultrasonic signals and image display will be described below in brief.

In general, the ultrasonic imaging device two- or three-dimensionally displays the structure of a living body. Thus, to transmit or receive an ultrasonic wave, an arrayed ultrasonic probe is used to form beams with an electric delay operation or the number of channels to be used set for each channel. Then, the focus of ultrasonic waves is two-or three-dimensionally scanned to image the structure. These operations are performed inside the transmission beam former 35 or the reception beam former 36. Furthermore, the controller unit 37 controls the beam formers in accordance with any of various imaging modes. A voltage is applied, via the transmission amplifier, to each channel in the probe controlled by the transmission beam former 35. Ultrasonic waves radiated by the respective channels are transmitted so as to be in phase at a certain focus. Transmission and reception are alternately performed using the same probe. Thus, a transmission and reception switch 31 needs to be used to switch between transmission and reception. During reception, reception signals are amplified by the reception amplifier 34. A signal processor 38 detects the signals via the reception beam former 36. The signal processor 38 matches the phases of signals with each other and adds the signals together. The resulting signal is converted by filter processing, logarithmic compression, and detection into two- or three-dimensional image data corresponding to field scan prior to scan conversion. For imaging of a blood flow using Doppler, the signal is converted into data by another filter processing and then quadrature detection, range gate processing, and the like. The resulting data is scan-converted by the scan converter 39 and then output to the display 60 as a video signal. The above-described control and the adjustment of the display can be carried out by a user via a user interface 24.

An ultrasonic probe 2000 includes a transducer array 1000 with arrayed groups each of a plurality of ultrasonic transducers 100 in which the groups are arranged like reed shape or a plurality of ultrasonic transducers 100 arranged like a fan in convex form. Furthermore, the ultrasonic probe 2000 includes an acoustic lens 210, a matching layer 220, and a conductive film 240 arranged on a medium (subject) side of the ultrasonic transducer 100; the acoustic lens 210 is configured to converge ultrasonic beams, and the matching layer 220 is configured to match the acoustic impedances of the ultrasonic transducer 100 and the medium (subject) with each other. A backing material 230 adapted to absorb propagation of ultrasonic waves can be provided on the back side (opposite to the medium side) of the ultrasonic probe 2000.

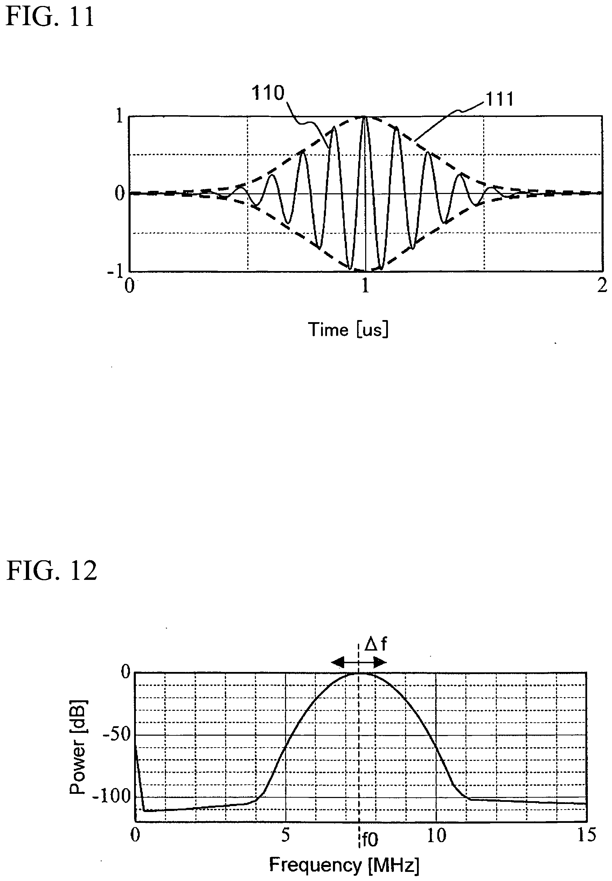

The waveform transmitted by the ultrasonic transducer varies depending on the application, for example, a B-mode tomographic image or color Doppler for blood flow measurement. Figure 11 shows a waveform used for color Doppler or the like and containing a plurality of waves and an envelope function superimposed in a time direction. Here, the superimposition of the envelope function in the time direction refers to the superimposition of a time-dependent weighting function (111 in Figure 11) on a waveform serving as a carrier (110 in Figure 11). There are various envelope functions for the respective applications, for example, a Gaussian function, Hanning function, a rectangular function, and a combination of any of these functions.

In the example shown in Figure 11, a Gaussian function envelope is superimposed. Figure 12 shows the power spectrum of a frequency space for the Gaussian function envelope. As seen in Figure 12, in the frequency space, the Gaussian function envelope has a Gaussian distribution around a carrier frequency f0. Such a Gaussian function-like envelope waveform as shown in Figure 11 is used to improve an SNR (signal to noise ratio) for signal processing while transmitting a large number of waves in a narrow frequency band; the Gaussian function-like envelope waveform is used for, for example, Doppler measurement. With a large number of waves of the same amplitude, when the waveform rises rapidly as in the case of a rectangular envelope, the number of components other than the carrier frequency increases. On the other hand, superimposition of a temporally smoothly rising envelope enables a reduction in the components other than the carrier frequency, which may be turned into noise during the signal processing.

In color Doppler measurement or the like, a Doppler effect is utilized to determine the movement speed of a moving reflection source such as a blood flow. In this case, a frequency shift ($\Delta f$) in a particular frequency is determined from a phase shift in the waveform. The frequency shift is finally converted into a speed. Thus, components with frequencies other than a fundamental (carrier) frequency (f0) may act as a noise source in the measurement of the phase shift. Hence, in the Doppler measurement, it is an important index for accuracy that only the power spectrum of the fundamental (carrier) frequency is large. Therefore, a Gaussian function-like envelope is superimposed to suppress the frequencies other than the carrier frequency component to make the frequency band narrower. Furthermore, the measurement is characterized in that the waveform contains a large number of waves in order to improve the SN (sensitivity).

Now, the principle of an increase in the transmission power of the cMUT in a limited cavity according to the present invention will be described. An electrical potential difference is applied to the fixed electrode 2 and the diaphragm-side electrode 3 in the cMUT 100. Then, as shown in Figure 1, an electro static force is exerted between the electrodes to displace the diaphragm 6. At this time, the center of the diaphragm 6 is displaced more prominently than the periphery thereof because the center is structurally less rigid than the periphery. When an effective dielectric permittivity is defined as $\varepsilon$, an electrode area is defined as S, an inter-electrode distance is defined as (d), a direct voltage applied to between the electrodes is defined as $V_{dc}$, and an alternating voltage applied to between the electrodes is defined as $V_{ac}$, the electro static force $F_e$ exerted on the diaphragm is expressed as follows using the time (t) as a variable.

$$F_e(t) \cong \varepsilon S * V_{dc} * V_{ac}(t)/d(t)^2 \dots \quad (1)$$

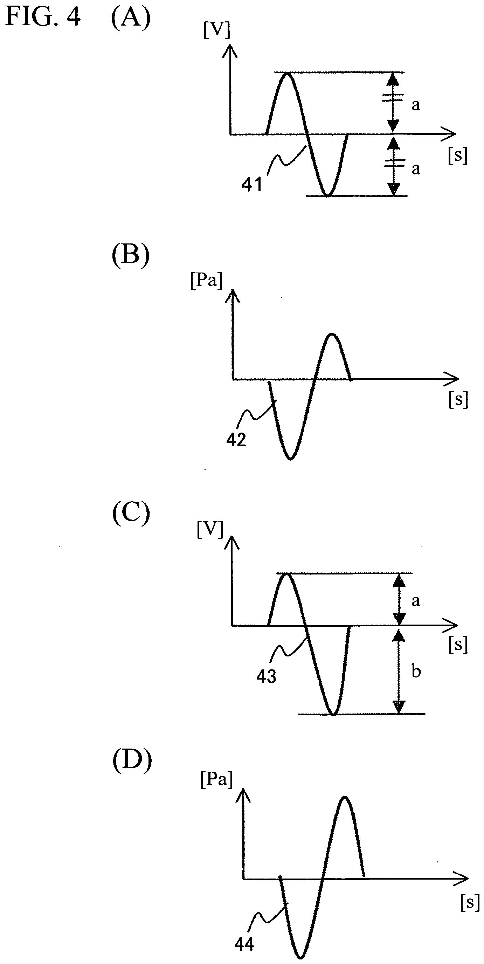

As indicated in Expression (1), for the same applied voltage and the same electrode area, the electro static force increases with decreasing distance d(t) between the electrodes, that is, the electro static force exhibits nonlinearity with respect to the alternating voltage $V_{ac}(t)$. Thus, if d(t) decreases, that is, $V_{ac}(t)$ increases with same polarity of $V_{dc}$ to move the diaphragm 6 closer to the substrate, a strong electro static force is exerted. In the opposite situation, only a weak electro static force is exerted. At this time, when the alternating voltage $V_{ac}(t)$ has a symmetrical positive and negative waveform as shown in Figure 4(A), an asymmetrical positive and negative waveform is output as a sound pressure as shown in Figure 4(B).

Thus, to reduce the nonlinearity of the cMUT, it is possible to apply an asymmetrical positive and negative driving voltage. For example, as shown in Figure 4(C), $V_{ac}(t)$ is set to be asymmetrical positive and negative in a certain given ratio of amplitude of positive and negative which is not 1 (b/a $\neq$ 1). Then, transmission power is obtained which is higher than that of a symmetrical waveform input as shown in Figure 4(D).

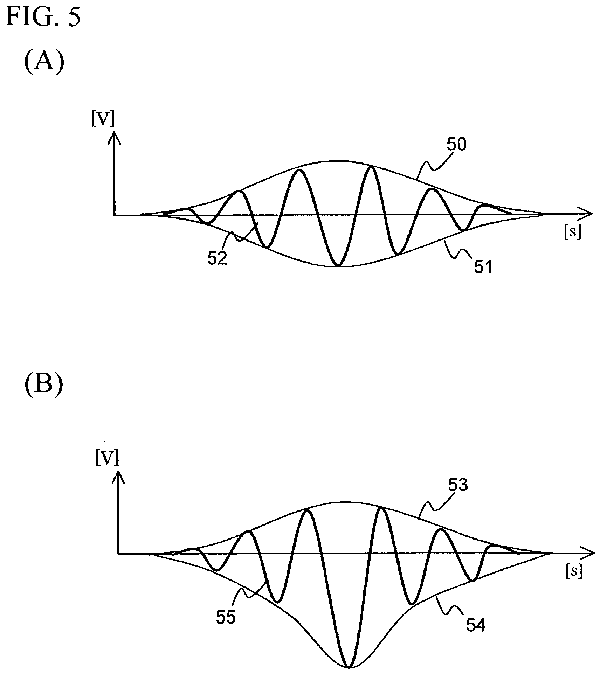

However, for a single wave, a certain fixed optimum ratio (b/a) may be used, but for a plurality of waves (multiwave) with a temporally varying amplitude (temporal variation) as in the above-described Doppler waveform (Figure 5(A)), the level of nonlinearity varies with the amplitude. Thus, for more optimum asymmetrical waveform input, b/a may be varied according to the temporally varying amplitude as shown in Figure 5(B) instead of being fixed as shown in Figure 4(C). That is, the voltage waveform to be input to the probe is obtained by superimposing an envelope function on a carrier waveform to be finally transmitted as a desired sound pressure waveform and further superimposing, on the resulting voltage waveform, a function with the ratio of amplitude of positive and negative varied according to the envelope.

In the description below, the following will be demonstrated. Transmission power is increased by using, as an input, an input asymmetrical positive and negative waveform with its ratio of amplitude of positive and negative adjusted, to allow a limited cavity to be more efficiently used. Furthermore, the optimum transmission spectrum for Doppler measurement or the like is obtained by varying the ratio of amplitude of positive and negative in conjunction with a temporally varying amplitude to concentrate power into a narrower frequency band instead of simply increasing the transmission power.

The present invention will be described below with reference to more specific examples.

In a first embodiment, in the cell structure of the ultrasonic transducer 100 (Figure 1), the driving voltage waveform to be applied to the electrodes is adjusted. Thus, the transmission power can be increased. Alternatively, the ratio of amplitude of positive and negative may be temporally varied as described above. The effects of this configuration on the waveform will be described. In this experiment, detailed design values were provided to a computer, and underwater transmission characteristics were numerically simulated.

In the present example, the material of the substrate 1 in the ultrasonic transducer 100 was silicon (Si). The material of the diaphragm 6 was silicon nitride (SiN). The material of the insulating films 4 and 5 was silicon oxide (SiO). The material of the fixed electrode 2 and the movable electrode 3 was aluminum. Furthermore, the cavity 7 was vacuum inside.

The horizontal shape will be described. The elements of the ultrasonic transducer 100 in the present example and an ultrasonic transducer 200 in a comparative example were all circular. The cavity 7 in the ultrasonic transducer 100 had a maximum diameter of 50 $\mu$m. The movable electrode 3 also had a diameter of 50 $\mu$m. The fixed electrode 2 had the same diameter as that of the cavity 7.

The vertical structure will be described. The thickness of the ultrasonic transducer 100 in the present example was as follows. The diaphragm 6 had a thickness of 1,700 nm. The insulating layers 4 and 5 had a thickness of 200 nm. The cavity 7 had a thickness of 100 nm. The thickness of the electrode layer 3 was neglected. However, this does not affect verification of the effects of the present invention within the scope of designed tuning.

Furthermore, the bias direct voltage was set equal to 90% of the voltage at which the diaphragm came into the substrate, that is, the collapse voltage. The collapse voltage in the present structure is 75 V. The collapse voltage is as follows. When two electrodes are supported by a certain rigid component such as a diaphragm via a cavity as in the case of the cMUT, while an increasing direct voltage is being applied to between the electrodes, the electro static force exerted between the electrodes significantly exceeds the rigidity of the diaphragm at a certain point in time. At the corresponding voltage, the diaphragm can no longer hold the cavity based on its rigidity. This voltage corresponds to the collapse voltage. Thus, the bias direct voltage is normally set equal to or lower than the collapse voltage. The bias direct voltage may be set equal to or higher than the collapse voltage. However, the standard usage is adopted in this case.

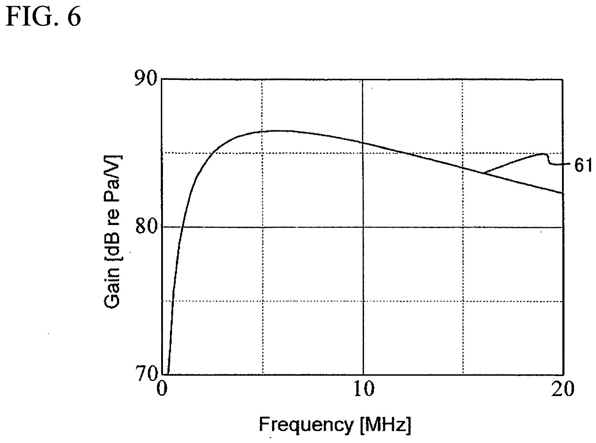

A transmission sensitivity band based on the present structure and the present bias conditions is shown in Figure 6. According to the definition of general transducers, for the sensitivity only for transmission or for reception, the sensitivity band is an interval of -3 dB from the maximum sensitivity frequency. In the present structure, the sensitivity band is between 2 MHz and 16 MHz. Thus, the center frequency (sensitivity band) is (16 MHz + 2 MHz)/2 = 9 MHz. However, the most sensitive frequency in the sensitivity band is in the vicinity of 7 MHz.

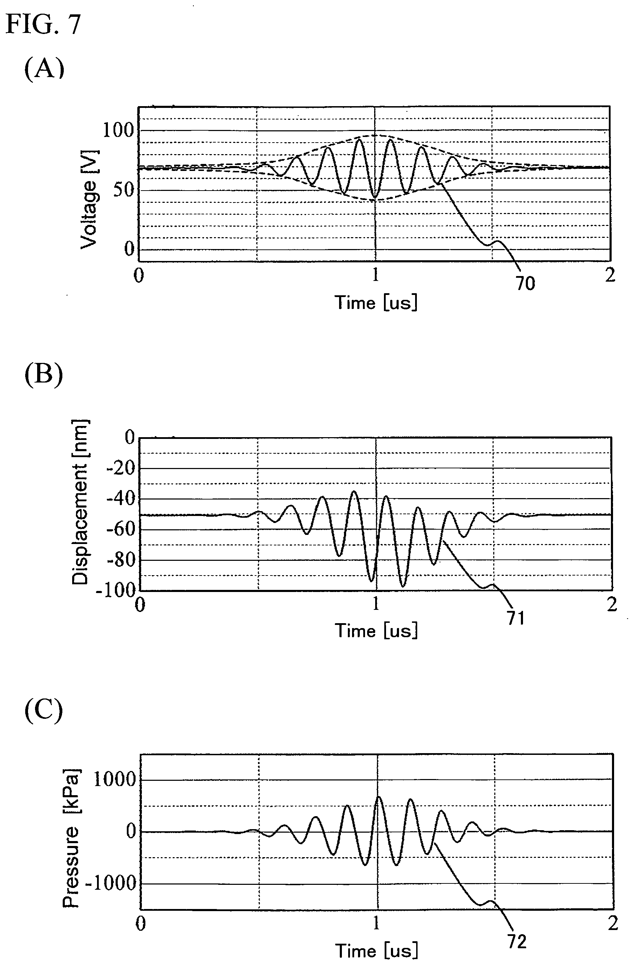

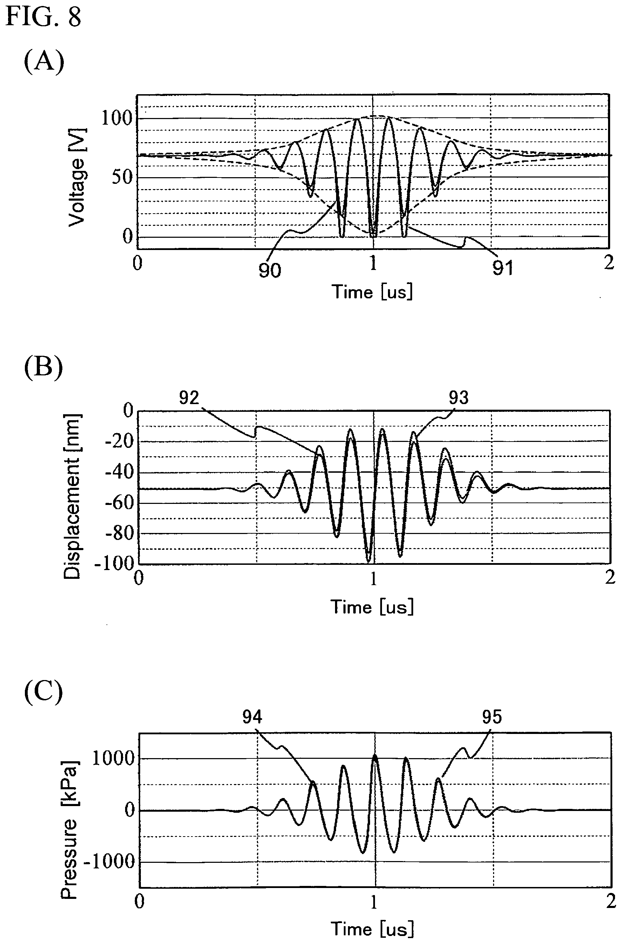

Figure 7 and Figure 8 shows the total voltage (A) applied to the present structure, the displacement (B) of the diaphragm, and the transmitted sound pressure waveform (C). In Figure 7, the input voltage has a symmetrical positive and negative waveform. A Gaussian envelope function is superimposed on a carrier frequency of 7.5 MHz, which is close to a frequency with the highest sensitivity in the sensitivity band. The wave number is about 10. Figure 8 shows a waveform obtained by superimposing, on the Gaussian envelope function superimposed in Figure 7, an amplitude ratio proportional to the Gaussian envelope function. The above-described relationship is indicated by:

$$V_{ac}(t) = \sin(\omega t) \times Gauss(t) \times Ratio\ (Gauss(t), polarity) \ ... \ (2)$$

Here, $\sin(\omega t)$ denotes the waveform of the carrier. $Gauss(t)$ denotes a Gaussian envelope function superimposed on the carrier. $Ratio(gauss(t), polarity)$ denotes a positive and negative amplitude weight corresponding to a function that is positive and negative to a Gaussian function. That is, for the conventional applied voltage shown in Figure 7, Ratio in Expression (2) is temporally constantly 1 (Ratio = 1). For the applied voltage in Figure 8, Ratio indicates the multiplication of the weight proportional to the Gaussian function $gauss(t)$, depending on the positive or negative polarity. For example, at the top of the envelope, which corresponds to the largest amplitude (in Figure 7, the temporally central point of the envelope function, Time = 1us), the ratio of amplitude of positive and negative b/a = 2(waveform 90) or 3(waveform 91). Otherwise the ratio of amplitude of positive and negative decreases in proportion to the envelope function. Furthermore, in an asymmetrical positive and negative waveform, the negative amplitude may be larger than that of a direct bias voltage depending on the voltage value. In this case, the electrical potential difference, which is otherwise to be reduced, increases, and the electro static force serves to generate a force between the electrodes such that the electrodes attract each other. The direction of this attracting force is opposite to the intended direction in which the voltage is reduced toward the negative side. Thus, in this case, that is, when the sum ($V_{dc} + V_{ac}$) of the direct bias current and the alternating voltage has a sign opposite to that of the direct bias voltage, the limiter is activated to reduce the amplitude of the alternating voltage. This prevents the sum from having a sign opposite to that of the direct voltage.

The displacement in Figure 7(B) and Figure 8(B) will be noted. A displacement of 0 indicates that no applied voltage. A negative displacement indicates displacement toward the substrate. In Figure 7 and Figure 8, at time = 0, only the direct bias voltage is applied, and the diaphragm is displaced toward the substrate by about 50 nm. As seen in Figure 7(B), when the alternating voltage has a symmetrical positive and negative waveform, the diaphragm is displaced so as to almost contact the substrate, that is, so as to reach a point of - 100 nm in an initial cavity. In contrast, the opposite displacement fails to reach the vicinity of a point of 0 [nm]. Thus, the cavity in which the diaphragm can be vibrated is not effectively utilized. On the other hand, when the input has an asymmetric waveform as shown in Figure 8, the diaphragm vibrates over a wider range in the cavity from the point of - 100 nm to the vicinity of the point of 0 nm. A diaphragm displacement 92 shown in Figure 8(B) corresponds to a voltage waveform 90 in Figure 8(A). A diaphragm displacement 93 shown in Figure 8(B) corresponds to a voltage waveform 91 in Figure 8(A).

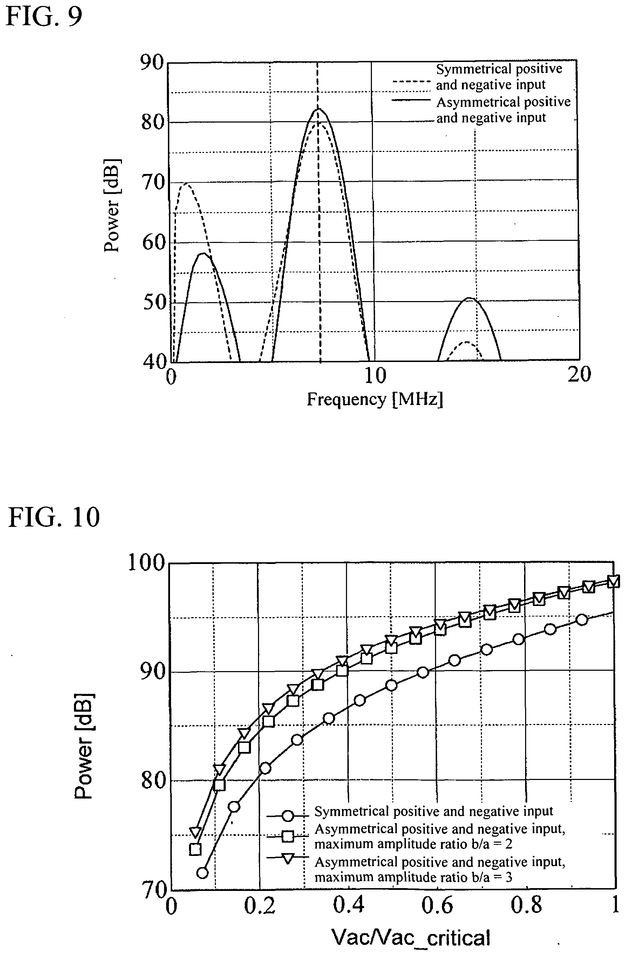

To quantitatively show an increase in transmission power, Figure 10 shows transmitted sound pressure power plotted against a variation in alternating voltage $V_{ac}$. The transmission power in each of Figure 7(C) and Figure 8(C) is converted into a frequency spectrum and set to have a frequency of 7.5 MHz, which corresponds to the carrier frequency. For practical reasons, the maximum applicable alternating voltage is set such that at this voltage, the diaphragm comes into contact with the substrate, and is normalized using $V_{ac}(V_{ac\_critical})$ at which the diaphragm comes into contact with the substrate. The condition in Figure 7 and Figure 8 covers a range from $V_{ac}/V_{ac\_critical} = 1$ shown in Figure 10 to a voltage lower than the collapse voltage by about 2.5%, that is, the voltage provided immediately before the diaphragm comes into contact with the substrate.

A comparison based on the transmission power in Figure 10 indicates that when the ratio of amplitude of positive and negative is variable, the transmission power is higher in the asymmetrical waveform input than in the symmetrical waveform input by about 3 dB. In the vicinity of $V_{ac\_critical}$, no great difference is observed between the maximum amplitude ratio b/a of 2 and the maximum amplitude ratio b/a of 3. In the present calculation, completely the same structure and bias voltage are used. Thus, the reception sensitivity is the same for symmetrical inputs and for asymmetrical inputs. Hence, an increase in transmission power corresponds directly to an increase in transmission and reception sensitivities. An increase in transmission and reception sensitivities by 3 to 5 dB is very effective for ultrasonic diagnosis devices.

Figure 9 shows the frequency spectra of transmitted sound pressures resulting from a symmetrical waveform input and an asymmetrical waveform input. Figure 9 shows that the input with the variable ratio of amplitude of positive and negative serves not only to increase the power of the basic frequency but also to reduce the bandwidth of frequencies around the basic frequency compared to the symmetrical waveform input. This indicates that the energy concentrates at the carrier frequency. The reason for the concentration is as follows. According to the present invention, the ratio of amplitude of positive and negative is varied depending on the amplitude value of $V_{ac}(t)$ to reduce the $V_{ac}(t)$-dependent nonlinearity of the cMUT, thus making the transmission waveform more similar to a symmetrical positive and negative one. In the frequency spectrum of the asymmetrical positive and negative waveform, the power spreads to frequencies other than the carrier frequency. However, when the transmission waveform is made similar to a symmetrical positive and negative one according to the present invention, the distribution of the power to frequencies other than the carrier frequency is suppressed. In Doppler measurement, the concentration of the power in a narrower frequency band is advantageous in terms of speed measurement accuracy and sensitivity. The present invention meets this requirement to improve both accuracy and sensitivity for the input of a multiwave waveform with a temporally varying amplitude as in the case of Doppler measurement.

As described above, in the input of a multiwave waveform, the utilization efficiency of the cavity is improved by controlling the ratio of amplitude of positive and negative taking the nonlinearity of the cMUT into account. This enables the transmission energy to be increased within a narrower frequency band.

**Claims**

1. An ultrasonic imaging device comprising:

   a cell array with a plurality of cells (100) each including a first electrode (2), a first member covering the first electrode, a second electrode (3) installed opposite the first electrode, a second member covering the second electrode, and a wall member (8) connecting the first member and the second member together; and
   a voltage controller (20~37) configured to control a voltage applied between the first electrode and the second electrode,
   wherein the voltage controller includes a direct voltage application section (20) configured to apply a direct voltage between the first electrode and the second electrode, an alternating voltage application section (37, 35, 21, 33) configured to apply an alternating voltage between the first electrode and the second electrode, and a waveform controller (37) configured to superimpose an envelope waveform on the waveform of the alternating voltage, **characterised in that** the waveform controller (37) is configured to apply a weight to the envelope waveform which depends on the positive and negative polarity of the alternating voltage so that the positive and negative amplitudes of the alternating voltage are made asymmetric, and to temporally vary the amplitude ratio of the alternating voltage based on voltage values of the alternating voltage and the direct voltage.

2. An ultrasonic imaging device according to claim 1, wherein the waveform controller (37) performs control so as to cause a temporal variation in the ratio of the amplitude in a region of the waveform of the alternating voltage in which the alternating voltage is higher than the value of the direct voltage to the amplitude in a region of the waveform of the alternating voltage in which the alternating voltage is lower than the value of the direct voltage.

3. The ultrasonic imaging device according to claim 1 wherein the waveform controller (37) is adapted to make asymmetric the amplitude in a region of the waveform of the alternating voltage in which the alternating voltage is higher than the value of the direct voltage and the amplitude in a region of the waveform of the alternating voltage in which the alternating voltage is lower than the value of the direct voltage.

4. The ultrasonic imaging device according to claim 1 wherein the waveform controller (37) sets the waveform of the alternating voltage in such a manner that the waveform contains a plurality of waves.

5. The ultrasonic imaging device according to claim 1 wherein the waveform controller (37) sets the waveform of the alternating voltage in such a manner that the envelope function is superimposed on a carrier waveform.

6. The ultrasonic imaging device according to claim 1 wherein the waveform controller (37) controls the waveform of the alternating voltage so as to vary an amplitude ratio between a region of the waveform of the alternating voltage in which the alternating voltage is higher than the value of the direct voltage and a region of the waveform of the alternating voltage in which the alternating voltage is lower than the value of the direct voltage.

7. The ultrasonic imaging device according to claim 1 wherein the waveform controller (37) sets the waveform of the alternating voltage in such a manner that the envelope function is superimposed on the waveform in a direction of time.

8. The ultrasonic imaging device according to claim 1 wherein the waveform controller (37) sets the waveform of the alternating voltage in such a manner that the envelope function and the weight which is a positive and negative amplitude weighting function are superimposed on the carrier waveform.

9. The ultrasonic imaging device according to claim 2 wherein the waveform controller (37) varies the amplitude ratio of the waveform of the alternating voltage in proportion to a Gaussian envelope function.

10. The ultrasonic imaging device according to claim 1 wherein the waveform controller (37) reduces the amplitude of the alternating voltage when a sum of the direct voltage and the alternating voltage has a sign opposite to the sign of the direct voltage.


**Patentansprüche**

1. Ultraschall-Bildgebungsvorrichtung umfassend:

ein Zellenfeld mit mehreren Zellen (100), die jeweils eine erste Elektrode (2), ein die erste Elektrode bedeckendes erstes Element, eine gegenüber der ersten Elektrode installierte zweite Elektrode (3), ein die zweite Elektrode bedeckendes zweites Element und ein das erste und das zweite Element miteinander verbindendes Wandelement (8) enthalten; und
eine Spannungssteuerung (20-37) zum Steuern einer zwischen der ersten und der zweiten Elektrode angelegten Spannung,
wobei die Spannungssteuerung einen Gleichspannungs-Anlegeabschnitt (20) zum Anlegen einer Gleichspannung zwischen die erste und die zweite Elektrode, einen Wechselspannungs-Anlegeabschnitt (37, 35, 21, 33) zum Anlegen einer Wechselspannung zwischen die erste und die zweite Elektrode und eine Wellenformsteuerung (37) zum Überlagern einer einhüllenden Wellenform über die Wellenform der Wechselspannung enthält, **dadurch gekennzeichnet, dass** die Wellenformsteuerung (37) eingerichtet ist, die einhüllende Wellenform mit einem Gewicht zu versehen, das von der positiven und der negativen Polarität der Wechselspannung abhängt, so dass die positive und die negative Amplitude der Wechselspannung asymmetrisch gemacht werden, und das Amplitudenverhältnis der Wechselspannung auf Grund der Spannungswerte der Wechselspannung und der Gleichspannung zeitlich zu variieren.

2. Ultraschall-Bildgebungsvorrichtung nach Anspruch 1, wobei die Wellenformsteuerung (37) eine solche Steuerung ausführt, dass eine zeitliche Variation des Verhältnisses der Amplitude in einem Bereich der Wellenform der Wechselspannung, in dem die Wechselspannung höher als der Wert der Gleichspannung ist, zur Amplitude in einem Bereich der Wellenform der Wechselspannung bewirkt wird, in dem die Wechselspannung niedriger als der Wert der Gleichspannung ist.

3. Ultraschall-Bildgebungsvorrichtung nach Anspruch 1, wobei die Wellenformsteuerung (37) eingerichtet ist, die Amplitude in einem Bereich der Wellenform der Wechselspannung, in dem die Wechselspannung höher als der Wert der Gleichspannung ist, und die Amplitude in einem Bereich der Wellenform der Wechselspannung, in dem die Wechselspannung niedriger als der Wert der Gleichspannung ist, asymmetrisch zu machen.

4. Ultraschall-Bildgebungsvorrichtung nach Anspruch 1, wobei die Wellenformsteuerung (37) die Wellenform der Wechselspannung so festlegt, dass die Wellenform mehrere Wellen enthält.

5. Ultraschall-Bildgebungsvorrichtung nach Anspruch 1, wobei die Wellenformsteuerung (37) die Wellenform der Wechselspannung so festlegt, dass die einhüllende Funktion einer Trägerwellenform überlagert wird.

**6.** Ultraschall-Bildgebungsvorrichtung nach Anspruch 1, wobei die Wellenformsteuerung (37) die Wellenform der Wechselspannung so steuert, dass ein Amplitudenverhältnis zwischen einem Bereich der Wellenform der Wechselspannung, in dem die Wechselspannung höher als der Wert der Gleichspannung ist, und einem Bereich der Wellenform der Wechselspannung, in dem die Wechselspannung niedriger als der Wert der Gleichspannung ist, variiert wird.

**7.** Ultraschall-Bildgebungsvorrichtung nach Anspruch 1, wobei die Wellenformsteuerung (37) die Wellenform der Wechselspannung so festlegt, dass der Wellenform die einhüllende Funktion in zeitlicher Richtung überlagert wird.

**8.** Ultraschall-Bildgebungsvorrichtung nach Anspruch 1, wobei die Wellenformsteuerung (37) die Wellenform der Wechselspannung so festlegt, dass die einhüllende Funktion und das Gewicht, bei dem es sich um eine Gewichtungsfunktion für eine positive und negative Amplitude handelt, der Trägerwellenform überlagert werden.

**9.** Ultraschall-Bildgebungsvorrichtung nach Anspruch 2, wobei die Wellenformsteuerung (37) das Amplitudenverhältnis der Wellenform der Wechselspannung im Verhältnis zu einer Gaußschen einhüllenden Funktion variiert.

**10.** Ultraschall-Bildgebungsvorrichtung nach Anspruch 1, wobei die Wellenformsteuerung (37) die Amplitude der Wechselspannung reduziert, wenn die Summe der Gleichspannung und der Wechselspannung das entgegengesetzte Vorzeichen zum Vorzeichen der Gleichspannung aufweist.

**Revendications**

**1.** Dispositif d'imagerie par ultrasons comprenant :

un réseau de cellules avec une pluralité de cellules (100) incluant chacune une première électrode (2), un premier élément recouvrant la première électrode, une deuxième électrode (3) installée à l'opposé de la première électrode, un deuxième élément recouvrant la deuxième électrode, et un élément de paroi (8) connectant le premier élément et le deuxième élément ensemble ; et

un contrôleur (20~37) de tension configuré pour commander une tension appliquée entre la première électrode et la deuxième électrode,

dans lequel le contrôleur de tension inclut une section (20) d'application de tension continue configurée pour appliquer une tension continue entre la première électrode et la deuxième électrode, une section (37, 35, 21, 33) d'application de tension alternative configurée pour appliquer une tension alternative entre la première électrode et la deuxième électrode, et un contrôleur (37) de forme d'onde configuré pour superposer une forme d'onde d'enveloppe sur la forme d'onde de la tension alternative,

**caractérisé en ce que**

le contrôleur (37) de forme d'onde est configuré pour appliquer un poids à la forme d'onde d'enveloppe qui dépend de la polarité positive et négative de la tension alternative de telle manière que les amplitudes positive et négative de la tension alternative sont rendues asymétriques, et pour faire varier temporellement le rapport d'amplitude de la tension alternative sur la base de valeurs de tension de la tension alternative et de la tension continue.

**2.** Dispositif d'imagerie par ultrasons selon la revendication 1, dans lequel le contrôleur (37) de forme d'onde exécute une commande de manière à causer une variation temporelle du rapport de l'amplitude dans une région de la forme d'onde de la tension alternative dans laquelle la tension alternative est supérieure à la valeur de la tension continue sur l'amplitude dans une région de la forme d'onde de la tension alternative dans laquelle la tension alternative est inférieure à la valeur de la tension continue.

**3.** Dispositif d'imagerie par ultrasons selon la revendication 1 dans lequel le contrôleur (37) de forme d'onde est adapté à rendre asymétrique l'amplitude dans une région de la forme d'onde de la tension alternative dans laquelle la tension alternative est supérieure à la valeur de la tension continue et l'amplitude dans une région de la forme d'onde de la tension alternative dans laquelle la tension alternative est inférieure à la valeur de la tension continue.

**4.** Dispositif d'imagerie par ultrasons selon la revendication 1 dans lequel le contrôleur (37) de forme d'onde règle la forme d'onde de la tension alternative de telle manière que la forme d'onde contient une pluralité d'ondes.

**5.** Dispositif d'imagerie par ultrasons selon la revendication 1 dans lequel le contrôleur (37) de forme d'onde règle la forme d'onde de la tension alternative de telle manière que la fonction d'enveloppe est superposée sur une forme d'onde de porteuse.

6. Dispositif d'imagerie par ultrasons selon la revendication 1 dans lequel le contrôleur (37) de forme d'onde commande la forme d'onde de la tension alternative de manière à faire varier un rapport d'amplitude entre une région de la forme d'onde de la tension alternative dans laquelle la tension alternative est supérieure à la valeur de la tension continue et une région de la forme d'onde de la tension alternative dans laquelle la tension alternative est inférieure à la valeur de la tension continue.

7. Dispositif d'imagerie par ultrasons selon la revendication 1 dans lequel le contrôleur (37) de forme d'onde règle la forme d'onde de la tension alternative de telle manière que la fonction d'enveloppe est superposée sur la forme d'onde dans une direction du temps.

8. Dispositif d'imagerie par ultrasons selon la revendication 1 dans lequel le contrôleur (37) de forme d'onde règle la forme d'onde de la tension alternative de telle manière que la fonction d'enveloppe et le poids qui est une fonction de pondération d'amplitude positive et négative sont superposés sur la forme d'onde de porteuse.

9. Dispositif d'imagerie par ultrasons selon la revendication 2 dans lequel le contrôleur (37) de forme d'onde fait varier le rapport d'amplitude de la forme d'onde de la tension alternative en proportion à une fonction d'enveloppe gaussienne.

10. Dispositif d'imagerie par ultrasons selon la revendication 1 dans lequel le contrôleur (37) de forme d'onde réduit l'amplitude de la tension alternative lorsqu'une somme de la tension continue et de la tension alternative a un signe opposé au signe de la tension continue.

# FIG. 1

FIG. 2

FIG. 3

FIG. 4 (A)

(B)

(C)

(D)

# FIG. 5

## (A)

## (B)

FIG. 6

## FIG. 7

(A)

(B)

(C)

FIG. 8

(A)

(B)

(C)

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 01097562 A
- US 20050200241 A1
- US 20070010744 A1
- US 6359367 B